# EUROPÄISCHE PATENTANMELDUNG

(11) **EP 1 208 812 A1**
(43) Veröffentlichungstag der Anmeldung: **29.05.2002**
(21) Anmeldenummer: 00811130.4
(22) Anmeldetag: 28.11.2000
(51) Int. Cl.: A61C 19/10, G01J 3/52

(54) **Modularer Farbschlüssel, Dentalkit, Referenzelement und Verfahren zur Farbauswahl**

(71) Anmelder: Coltène AG, 9450 Altstätten (SG) (CH)
(72) Erfinder: Dietschi, Didier, 1233 Bernex (CH); Lampl, Stephan, 9450 Lüchingen (CH)
(74) Vertreter: Hepp, Dieter

(57) **Zusammenfassung**

Ein Farbschlüsselsystem zur Farbauswahl für dentale Restaurationsmassen oder künstliche Zähne weist Referenzelemente auf, deren Referenzbereich vom Anwender modular aufgebaut werden kann. Eine besonders einfache Handhabung für den Anwender ergibt sich, wenn der Referenzbereich der Referenzelemente zweiteilig aus einem Kernteil und einem Mantelteil aufgebaut wird. Ein solches zweiteiliges, dem natürlichen Zahnaufbau folgendes System liefert eine grosse Reproduktionssicherheit und ausgezeichnete ästhetische Ergebnisse.

## Beschreibung

Die Erfindung betrifft einen Farbschlüssel, als Hilfsmittel zur Farbauswahl vorzugsweise von dentalen Restaurationsmassen oder künstlichen Zähnen sowie einen Dentalkit, ein Referenzelement und ein Verfahren zur Auswahl der Farbe insbesondere von dentalen Restaurationsmassen oder künstlichen Zähnen.

Zähne sind aus drei unterschiedlichen Schichten von Geweben aufgebaut. Im Innersten ist die Pulpa, ein blutdurchströmtes, rotes Nervengewebe, welches für die Farbe eines Zahnes eine gewisse Rolle spielen kann, für die Restaurationstechnik aber von untergeordneter Bedeutung ist. In der Mitte befindet sich das Dentin (Zahnbein), eine weiche, zäh-elastische, opake Masse von gelber bis rötlich-brauner Farbe. Die Aussenseite des Zahnes wird durch Enamel (Zahnschmelz), einer harten, spröden Masse mit hoher Transluzenz und geringer Eigenfarbe in gelb-grau-weissen Tönen gebildet.

Übliche Zahnfüllungen oder andere Dentalmassen ersetzen einen Teil Dentin und einen Teil Enamel. Farbe und Transluzenz der Dentalmassen werden deshalb so gewählt, dass sie Farbanteile beider Gewebe enthalten und idealerweise dem Erscheinungsbild ihrer Farbumgebung möglichst nahe kommen. Damit der Zahnarzt weiss, welche Farben er für ein ästhetisch befriedigendes Ergebnis zueinander kombinieren muss, braucht er die Hilfe eines Farbschlüssels.
Solche Farbschlüssel sind aus dem Stand der Technik bekannt.

So zeigt DE 198 51 134 einen Farbschlüssel mit einer Mehrzahl von Steckelementen, die in eine Steckbasis einsteckbar sind. Die Steckelemente enthalten einen Schaft und ein darauf aufgesetztes Farbmuster. Das Farbmuster ist einteilig und besteht aus den gleichen Materialien, welche für die Restauration eingesetzt werden. Die Musterelemente besitzen eine naturzahnartig texturierte Vorderseite und eine ebene, glatte Rückseite. Durch ein Gelenk zwischen Musterelement und Schaft wird ein Schwenken des Musterelementes möglich, was einen besseren Farbvergleich beim Patienten ermöglicht.

Durch die vorgefertigten Musterelemente mit einteiligem Aufbau gemäss DE 198 51 134 muss dem Anwender ein Musterelement für jede erdenkliche Kombination der Ausgangsmaterialien zur Verfügung gestellt werden, was zu einer grossen Anzahl Steckelemente und einer entsprechend schwerfälligen Handhabung des Farbschlüssels führt. Umgekehrt führt eine Beschränkung der Anzahl der Steckelemente zu einem Qualitätsverlust hinsichtlich der Farbechtheit, Reproduktionssicherheit und dem ästhetischen Ergebnis.

DE 195 09 830 zeigt einen Farbschlüssel mit Einstecktaschen in die Farbstifte mit an einem Ende angebrachten Farbflächen einsteckbar sind. Es können beliebig viele Einstecktaschen über entsprechende Hilfsmittel modular zusammengesetzt werden. Dies erlaubt dem Anwender eine individuelle Kategorisierung einer beliebigen Anzahl Farbstifte nach irgend einem von ihm verwendeten Farbenbezeichnungsschlüssel. Zur Ausgestaltung der Farbflächen der Farbstifte finden sich keine Angaben.

Die modulare Ausgestaltung der Einstecktaschen ist insbesondere auf die Lagerung und Kategorisierung einer Vielzahl von Farbstiften ausgerichtet. Der Farbschlüssel gemäss DE 195 09 830 ermöglicht keine Kombination einzelner Farbflächen. Entsprechend ist die Anzahl der benötigten Farbstifte hoch und die Handhabung bei der Farbauswahl schwerfällig.

US 5,743,730 zeigt ein für zahntechnische Laboratorien konzipiertes Farbinformationssystem, insbesondere zur Applikation bei Prothesen auf Porzellanbasis. Das Farbinformationssystem besteht aus einem Basisblatt das mit weiteren, bevorzugt mit vier, neutralen Blättern überlagert werden kann. Auf die neutralen Blätter sind mit Hilfe von Farbstiften Referenzfarbflächen aufbringbar. Damit entsteht ein schichtweiser Aufbau der Referenz, welcher dem Zahntechniker eine schichtweise Nacharbeitung bei der Anfertigung von Zahnprothesen erlaubt.

Ein Nachteil des Farbsystems gemäss US 5,743,730 besteht darin, dass trotz der Überlagerung mehrerer Schichten von Blättern die optische Wirkung der entstehenden Referenz sich von der Wirkung echter Zähne unterscheidet. Faktoren wie Lichtbrechung, Transluzenz, etc. werden zu wenig berücksichtigt. Zudem entsprechen die mit Hilfe der Farbstifte applizierten Referenzfarben nicht den Originalfarben der vom Zahntechniker eingesetzten Dentalmassen. Die mehrschichtige Referenz ist zudem nicht oder nur schwer so positionierbar, dass ein direkter Farbvergleich am Gebiss des Patienten möglich ist.

Aufgabe der Erfindung ist es deshalb, die Nachteile des Bekannten zu vermeiden, insbesondere einen möglichst einfach handhabbaren Farbschlüssel zur Farbauswahl, insbesondere für dentale Restaurationsmassen oder künstliche Zähne bereitzustellen, welcher mit möglichst wenig Farbreferenzelementen einen richtigen Farbeindruck der Zahnstruktur vermittelt, eine hohe Reproduktionssicherheit gewährleistet und hohen ästhetischen Anforderungen genügt. Der Farbschlüssel soll insbesondere auch auf einfache Weise direkt am Gebiss des Patienten anwendbar sein.

Erfindungsgemäss wird diese Aufgabe mit einem Farbschlüssel sowie mit einem Verfahren zur Farbauswahl insbesondere von dentalen Restaurationsmassen oder künstlichen Zähnen gemäss den Merkmalen des kennzeichnenden Teils der unabhängigen Patentansprüche gelöst.

Ein Farbschlüssel, insbesondere zur Farbauswahl von dentalen Restaurationsmassen oder künstlichen Zähnen, weist eine Mehrzahl von Referenzelementen auf, deren Referenzbereich modular aus wenigstens zwei Teilen aufbaubar ist.

Unter modular aufbaubar im Sinne der Erfindung wird dabei verstanden, dass die Referenzelemente vom Anwender während der Farbauswahl aus wenigstens zwei Teilen zusammengefügt werden können. Dabei ist wenigstens der Referenzbereich der Referenzelemente modular aus wenigstens zwei Teilen aufbaubar. Es ist aber auch denkbar, dass das ganze Referenzelement modular aufbaubar ist. Als Referenzbereich im Sinne der Erfindung wird der Bereich des Referenzelementes bezeichnet, welcher die Referenzfarbe für die Farbauswahl aufweist. Die modular aufgebauten Referenzbereiche der Referenzelemente in erfindungsgemässen Farbschlüsseln haben in jedem Fall eine dreidimensionale räumliche Ausdehnung. Insbesondere weisen die zum modularen Aufbau der Referenzbereiche der Referenzelemente verwendeten Teile Kanten und/oder Krümmungen auf. Insgesamt tragen die beim modularen Aufbau eingesetzten Teile damit zur Ausbildung eines voluminösen Körpers im Referenzbereich bei. Dies ist in Bezug auf die Farbechtheit besonders wichtig, weil damit auch Effekte wie Lichtbrechung, Transluzenz, etc., ausreichend berücksichtigt werden können.

Weil der Anwender die Möglichkeit hat, den Referenzbereich selbst modular durch Kombination aus wenigstens zwei Teilen aufzubauen, kann vermieden werden, dass im Farbschlüssel bereits sämtliche Kombinationen der Farbmaterialien als einzelne Referenzelemente zur Verfügung gestellt werden müssen. Durch geeignete Wahl der Farben der Teile für den modularen Aufbau des Referenzbereichs kann so mit wenigen Grundelementen ein Farbschlüssel erhalten werden, welcher über einen grossen Farbbereich zufriedenstellende Resultate bezüglich Reproduktionssicherheit und ästhetischen Anforderungen liefert. Die Anzahl der Referenzelemente kann dadurch verkleinert werden, wodurch die Handhabbarkeit des Farbschlüssels erleichtert wird und der Platzbedarf für das Gesamtsystem insgesamt minimiert wird.

Der erfindungsgemässe Farbschlüssel kann insbesondere zur Farbauswahl von dentalen Restaurationsmassen oder künstlichen Zähnen verwendet werden. Denkbar ist ein Einsatz des erfindungsgemässen Farbschlüssels aber überall dort, wo Materialien, z. B. im Dentalbereich in eine bereits vorhandene Farbumgebung einfügt werden. Dazu zählen beispielsweise auch Inlays, Onlays, Kronen, Brücken, etc.

Eine besonders einfache Handhabung des Farbschlüssels wird erreicht, wenn der Referenzbereich der Referenzelemente zweiteilig aus einem Kernteil und einem Mantelteil modular aufbaubar ist.

Überraschenderweise hat sich gezeigt, dass ein zweiteiliger modularer Aufbau des Referenzbereichs der Referenzelemente ausreicht, um Resultate zu liefern, die höchsten Anforderungen an die Farbechtheit und Ästhetik genügen. Ein solcher zweiteiliger Aufbau widerspiegelt in einfachster Weise den vorgängig genannten Zahnaufbau. Der Kernteil enthält dabei vorteilhafterweise verschiedene Farbtöne, wie sie im natürlichen Dentingewebe, allenfalls in Abhängigkeit des Alters des Patienten, gefunden werden. In Analogie dazu kann der Mantelteil verschiedene Farbabstufungen wie sie in der äusseren Zahnschicht, dem Enamel, auftreten, enthalten. Der Mantelteil weist dabei wie das Enamel eine gute Transluzenz auf, so dass der Kernteil durch den Mantelteil durchscheint. Die resultierende Farbkombination des Kern- und Mantelteils im Referenzbereich ergibt so für den Anwender durch das Zusammenspiel von Kern- und Mantelteil einen realistischen Farbeindruck, welcher das Zusammenspiel von Dentin und Enamel beim Zahn wiederspiegelt.

In einem bevorzugten optimierten Ausführungsbeispiel weist der Farbschlüssel sechs Mantelteile und sieben Kernteile auf. Ein solcher Standardfarbschlüssel hat nur einen geringen Platzbedarf und das Handling ist gegenüber Farbschlüsseln aus dem Stand der Technik wesentlich vereinfacht.

Mit Vorteil sind der Kernteil und der Mantelteil des Referenzelementes so ausgebildet, dass sie formschlüssig zusammenfügbar sind. Dabei ist es denkbar, dass der Kernteil in den Mantelteil eingebracht wird. Dies kann beispielsweise durch Einsetzen des Kernteils in einen Hohlraum des Mantelteils geschehen. Alternativ ist es aber auch denkbar, den Mantelteil aussen am Kernteil anzuordnen, beispielsweise durch Überziehen, Aufstecken, etc.

Die formschlüssige Ausgestaltung von Kernteil und Mantelteil verhindert grössere Lufteinschlüsse beim modularen Aufbauen, welche zu unerwünschter Lichtbrechung führen könnten. Um allfällige Störeffekte zu verhindern, kann vor dem Zusammenfügen von Kernteil und Mantelteil in bekannter Weise eine Glycerinlösung in allfällig trotzdem vorhandene Zwischenräume gebracht werden.

Für den modularen Aufbau des Referenzbereichs des Referenzelementes wie auch für den Vorgang der Farbauswahl, ist es von Vorteil, wenn wenigstens der Kernteil oder der Mantelteil ein Halteelement aufweisen, über das der Anwender das Referenzelement mit seinen Fingern fixieren kann.

In einem besonders bevorzugten Ausführungsbeispiel haben sowohl Kernteile und Mantelteile je ein Halteelement, insbesondere einen Stiel, wobei die beiden Halteelemente eines Kern- und Mantelteils zusammenfügbar sind. Dadurch wird ein besonders gutes Handling sowohl von Kernteilen wie auch von Mantelteilen gewährleistet. Dies ist insbesondere dann bedeutsam, wenn Kern- und Mantelteile getrennt gelagert sind. Ebenso kann es für eine Vorauswahl eines Kernteils, resp. eines Mantelteils aus einer Vielzahl von Kern- und Mantelteilen vorteilhaft sein, wenn sowohl Kern- und Mantelteile über je ein Halteelement verfügen. Besonders vorteilhaft ist es, wenn die beiden Halteelemente von Kern- und Mantelteil zusammenfügbar sind. Dadurch wird erreicht, dass nicht nur der Referenzbereich, bestehend aus Kern- und Mantelteil, sondern auch der Haltebereich des resultierenden Referenzelementes modular aufgebaut ist, was insgesamt zur mechanischen Stabilität des Referenzelementes beiträgt.

In einem besonders bevorzugten Ausführungsbeispiel weisen die Halteelemente von Kern- und Mantelteilen Hilfsmittel auf, mit denen Kern- und Mantelteil gegenseitig ausrichtbar sind. Für die Reproduktionssicherheit des Farbschlüssels ist es entscheidend, dass die modular aufgebauten Referenzelemente, insbesondere der Referenzbereich, unabhängig von der Auswahl der entsprechenden Kern- und Mantelteile eine reproduzierbare Anordnung aufweist. Dies wird dadurch erreicht, dass Kern- und Mantelteil gegenseitig ausrichtbar sind, insbesondere so, dass sie im modular zusammengebauten Referenzelement formschlüssig sind.

Besonders einfach wird dies erreicht, wenn Kern- und Mantelteil von einer ersten Kontaktposition in eine Endposition bringbar sind. Besonders einfach wird dies erreicht, wenn ein Halteelement eine Nut aufweist , in die das andere Halteelement des anderen Teils eingeführt und verschiebbar gelagert wird.

Besonders vorteilhaft für die Farbechtheit und die Reproduktionssicherheit ist es, wenn der Kern- und Mantelteil aus Dentalmassen bestehen, insbesondere den beim Füllen von Kavitäten oder beim Aufbau von künstlichen Zähnen verwendeten Originalmaterialien. Besonders vorteilhaft für den Anwender ist es, wenn ihm ein Dentalkit zur Verfügung steht, welcher Materialien für die dentale Restauration sowie einen erfindungsgemässen Farbschlüssel mit modular aus den obgenannten Materialien aufbaubaren Referenzelementen enthält. Selbstverständlich kann der Dentalkit weitere Komponenten wie Primer, Etching Gel, Polierpaste etc., enthalten, welche üblicherweise bei der Restauration benötigt werden.

In einem bevorzugten Ausführungsbeispiel des Farbschlüssels sind das oder die Halteelemente von Kern- und oder Mantelteil aus einem transparenten Kunststoff ausgebildet. Damit wird erreicht, dass die Halteelemente den Farbeindruck, welcher der Anwender aus dem Referenzbereich der Referenzelemente erhält, nicht negativ beeinträchtigen. Idealerweise ist der verwendete Kunstoff im weiteren lösungsmittelresistent, damit insbesondere die üblicherweise eingesetzten Desinfektionsmittel nicht zu einer Trübung oder anderweitigen negativen Beeinträchtigung der Halteelemente führen. Bevorzugte Kunststoffe sind z. B. Polyamide, Polycarbonate, Polymethylacrylate, etc. Selbstverständlich ist es auch denkbar für weniger anspruchsvolle Applikationen des Farbschlüssels nicht transparente Kunststoffe einzusetzen.

Wenn der modular aufgebaute Referenzbereich der Referenzelemente im wesentlichen die Form eines Zahnes aufweist, werden Faktoren wie Transluzenz, Spiegelungen oder unterschiedliche Schichtdikken von Enamel und Dentin besonders gut berücksichtigt, was sich insbesondere günstig auf Reproduktionssicherheit und Farbechtheit auswirkt, weil dadurch dem Auge ermöglicht wird, Gleiches mit Gleichem zu vergleichen. Selbstverständlich sind für weniger anspruchsvolle Einsatzgebiete und Anwendungen auch Referenzelemente, welche einen schematisierten Referenzbereich aufweisen, z. B. in Form eines Quaders oder einer Halbkugel, denkbar. In jedem Fall haben die modular aufgebauten Referenzbereiche der Referenzelemente in erfindungsgemässen Farbschlüsseln aber eine dreidimensionale räumliche Ausdehnung.

Ein optimales Handling für den Anwender wird erreicht, wenn der Farbschlüssel wenigstens eine Basisplatte aufweist, in welche die Referenzelemente einsteckbar sind. In einem besonders bevorzugten Ausführungsbeispiel weist der Farbschlüssel eine erste Basisplatte auf, in welche die Kernteile mit ihren Halteelementen einsteckbar sind und eine zweite Basisplatte , in welche die Mantelteile über ihre Halteelemente einsteckbar sind, so dass Kern- und Mantelteile getrennt lagerbar sind.

Ein weiterer Gegenstand der Erfindung ist ein Verfahren zur Farbauswahl im Dentalbereich mit einem Farbschlüssel mit Referenzelementen, die aus Kern- und Mantelteilen modular aufbaubar sind.

Das erfindungsgemässe Verfahren ermöglicht es dem Anwender, vor dem Zusammenbau der Referenzelemente eine getrennte Vorauswahl für Kern- und Mantelteil zu treffen.

In einem Schritt a) werden verschiedene Kernteile an einer ersten Stelle, insbesondere an einem Zahnhals, positioniert, bis eine farbliche Übereinstimmung mit dem Referenzobjekt, insbesondere dem Dentin des Patienten, erzielt wird.

In einem Schritt b), welcher vor oder nach Schritt a) durchgeführt werden kann, werden verschiedene Mantelteile an einer zweiten von der ersten verschiedenen Stelle, insbesondere an einer Schneidekante eines Zahnes, positioniert, bis eine farbliche Übereinstimmung mit dem Referenzobjekt, insbesondere dem Enamel des Patienten, erzielt wird.

In einem Schritt c) wird das in Schritt a) ausgewählte Kernteil mit dem in Schritt b) ausgewählten Mantelteil modular zu einem Referenzelement aufgebaut, so dass das Referenzelement einen modular aufgebauten Referenzbereich aufweist, welcher den natürlichen Zahnaufbau aus Dentin und Enamel widerspiegelt.

Besonders vorteilhaft ist es, wenn das in Schritt c) aufgebaute Referenzelement in einem weiteren Schritt d) an einem Zahn zum Farbvergleich positioniert wird um die Farbechtheit zu prüfen. Die Schritte a) bis d) werden idealerweise so lange wiederholt, bis der Farbvergleich in Schritt d) zu einem akzeptablen Resultat führt.
Das erfindungsgemässe Verfahren ermöglicht damit einen schrittweisen Farbvergleich von Dentin und Enamel und eine Gesamtbeurteilung durch die modular aufgebauten Referenzelemente. Den modularen Teilen der Referenzelemente sind dabei vorteilhaft je eindeutige Referenzierungen zugeordnet. Jeder möglichen Kombination von Dentinfarbe (Kernteil) und Enamelfarbe (Mantelteil) kann auf diese Weise eine eindeutige Dentalmasse, insbesondere Restaurationsmasse zugeordnet werden.

Die Erfindung ist im folgenden in Ausführungsbeispielen und anhand der Zeichnungen näher erläutert. Diese dienen ausschliesslich der besseren Illustration einzelner erfindungsgemässer Ausführungsformen und sind keineswegs als abschliessend zu betrachten. Es zeigen:
- Figur 1: ein bevorzugtes Ausführungsbeispiel eines erfindungsgemässen Farbschlüssels;
- Figur 2: eine perspektivische Darstellung eines Kern- und Mantelteils eines erfindungsgemässen Farbschlüssels zum modularen Aufbau eines Referenzelementes und
- Figur 3a/3b: ausgewählte alternative Ausführungsbeispiele von Referenzelementen eines erfindungsgemässen Farbschlüssels, deren Referenzbereich sich modular aufbauen lässt.

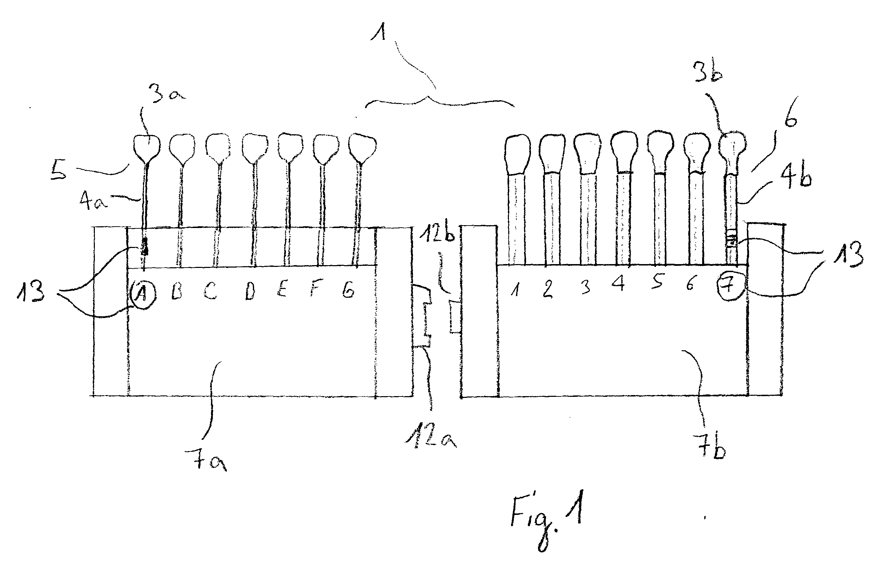

Figur 1 zeigt einen erfindungsgemässen Farbschlüssel 1. Der gezeigte Farbschlüssel 1 besteht aus zwei Basisplatten 7a und 7b. In die erste Basisplatte 7a sind Kernteile 5 über Halteelemente 4a eingesteckt. Der Referenzbereich 3a der Kernteile 5 besteht aus dentalen Originalmaterialien. Die einzelnen Kernteile 5 können anhand bestimmter Kriterien, z. B. anhand der Helligkeit in Basisplatte 7a angeordnet sein. Um eine reproduzierbare Anordnung zu gewährleisten, können sowohl die Basisplatte 7a wie auch die einzelnen Kernteile 5 einen Index 13 enthalten. In einer zweiten Basisplatte 7b sind Mantelteile 6 über die Halteelemente 4b eingesteckt. Der Referenzbereich 3b der Mantelteile 6 dient zum Farbvergleich mit der äussersten Zahnschicht (Enamel). Die verschiedenen Mantelteile 6 können abgestuft nach verschiedenen Helligkeiten, wie sie z. B. alterungsbedingt beim Patienten auftreten, angeordnet sein. Zur reproduzierbaren Anordnung können Mantelteile 6 und Basisplatte 7b ebenfalls einen Index 13 aufweisen. Besonders vorteilhaft für eine gute Handhabung des Farbschlüssels 1 kann es sein, wenn die beiden Basisplatten 7a, 7b über Verbindungselemente 12a und 12b verbindbar sind.

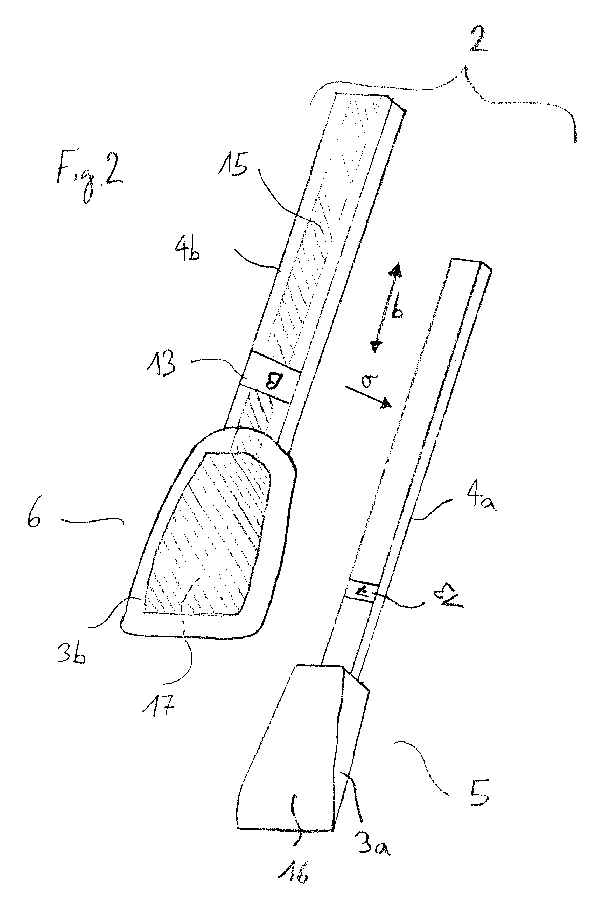

Figur 2 zeigt eine perspektivische Darstellung eines Kernteils 5 und eines Mantelteils 6 zum modularen Aufbau eines Referenzelementes 2 eines erfindungsgemässen Farbschlüssels 1. Der Kernteil 5 weist ein Halteelement 4a, insbesondere einen Stiel auf. Der Referenzbereich 3a des Kernteils 5 ist aus dentalen Originalmassen aufgebaut, wie sie bei der Restauration oder beim Schichtaufbau von Zähnen verwendet werden. Ein Mantelteil 6 weist ein Halteelement 4b und einen Referenzbereich 3b auf. Der Referenzbereich 3b ist ebenfalls aus dentalen Originalmassen ausgebildet. Aus dem Kernteil 5 und dem Mantelteil 6 kann vom Anwender modular ein Referenzelement 2 aufgebaut werden. Dabei wird das Mantelteil 6 über den Kernteil 5 durch eine Bewegung in Richtung (a) angeordnet, wobei das Halteelement 4a des Kernteil 5 in eine Nut 15 des Halteelementes 4b des Mantelteiles 6 zu liegen kommt. In dieser sogenannten Kontaktposition berührt der Referenzbereich 3b des Mantelteils 6 das Halteelement 4a des Kernteils 5. Durch eine relative Bewegung vom Kernteil 5 und Mantelteil 6 entlang der Längsrichtung der Halteelemente 4a und 4b (Pfeilrichtung b) wird das Referenzelement 2 in seine Endposition gebracht, wobei für die longitudinale Bewegung entlang (b) die Nut 15 im Halteelement 4b des Mantelteils 6 als Leitschiene dient. Die Referenzbereiche 3a, 3b sind je als dreidimensionale Körper aufgebaut. Die Form der Aussenfläche 16 des Referenzbereichs 3a des Kernteils 5 entspricht etwa der Form der Innenfläche 17 des Mantelteils 6. In der Endposition sind die Aussenfläche 16 des Kernteils 5 sowie die Innenfläche 17 des Mantelteils 6 insbesondere in den Referenzbereichen 3a, 3b formschlüssig zusammengefügt.

Mit dem hier gezeigten Referenzelement 2 ist ein schrittweiser Farbvergleich von Zahnkern (Dentin) und Zahnschmelz (Enamel) sowie eine Gesamtbeurteilung durch die modular aufgebauten Referenzelemente 2 möglich.

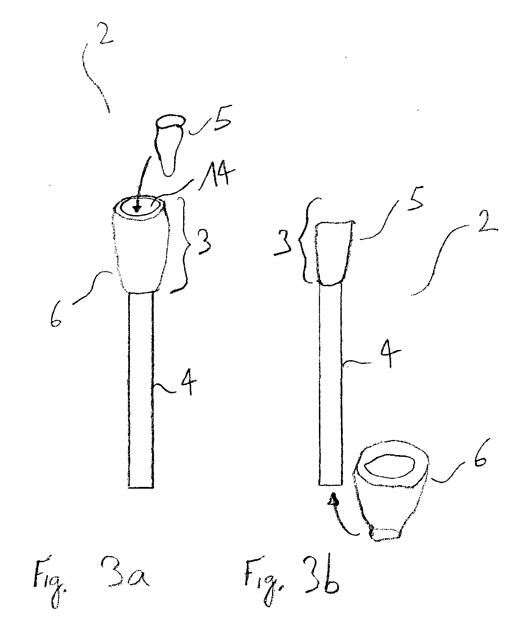

In Figur 3 sind zwei alternative Ausführungsbeispiele von Referenzelementen 2 eines erfindungsgemässen Farbschlüssels 1 dargestellt, wobei die Referenzelemente 2 modular aufbaubare Referenzbereiche 3 aufweisen. In Figur 3a ist ein Mantelteil 6 gezeigt, welcher ein Halteelement 4, insbesondere einen Stiel aufweist. Der Mantelteil, 6, welcher idealerweise aus den original verwendeten Dentalmaterialien besteht, weist in seinem Innern einen Hohlraum 14 auf, in welchen ein ausgewähltes Kernteil 5 eingesetzt werden kann. Das so entstehende Referenzelement 2 mit modular aufgebautem Referenzbereich 3 weist gemäss Figur 3a eine zahnähnliche Form auf. Selbstverständlich sind für die weniger komplexen Anwendungen auch einfachere Grundformen des Referenzbereichs 3 denkbar. Beispielsweise kann der Referenzbereich 3 als Halbkugel oder stilisierter Kubus ausgebildet sein.

In Figur 3b ist ein Kernteil 5 mit einem Halteelemente 4 gezeigt. Auf das Kernteil 5 kann ein Mantelteil 6 aufgesetzt, übergezogen, aufgesteckt, etc., werden. Auf diese Weise resultiert ebenfalls ein Referenzelement 2 mit modular aufgebautem Referenzbereich 3.

Selbstverständlich sind weitere Formen von modular aufbaubaren Referenzelementen 2 denkbar. Insbesondere ist es denkbar, den Referenzbereich 3 aus mehr als zwei Teilen aufzubauen.

## Patentansprüche

1. Farbschlüssel, insbesondere zur Farbauswahl von dentalen Restaurationsmassen oder künstlichen Zähnen, mit einer Mehrzahl von Referenzelementen (2), die einen Referenzbereich (3) aufweisen **dadurch gekennzeichnet, dass** wenigstens der Referenzbereich (3) modular aus wenigstens zwei Teilen aufbaubar ist.

2. Farbschlüssel nach Anspruch 1 **dadurch gekennzeichnet, dass** der Referenzbereich (3a/3b) der Referenzelemente (2) zweiteilig aus einem Kernteil (5) und einem Mantelteil (6) modular aufbaubar ist.

3. Farbschlüssel nach einem der Ansprüche 1 oder 2, **dadurch gekennzeichnet, dass** der Kernteil (5) und der Mantelteil (6) des Referenzelementes (2) so ausgebildet sind, dass sie formschlüssig zusammenfügbar sind.

4. Farbschlüssel nach einem der Ansprüche 1 bis 3, **dadurch gekennzeichnet, dass** der Kernteil (5) und der Mantelteil (6) je ein Halteelement (4a/4b), insbesondere einen Stiel aufweisen, wobei die beiden Halteelemente (4a/4b) zusammenfügbar sind.

5. Farbschlüssel nach Anspruch 4, **dadurch gekennzeichnet, dass** die Halteelemente (4a/4b) Hilfsmittel aufweisen, mit denen Kernteil (5) und Mantelteil (6) gegenseitig ausrichtbar sind.

6. Farbschlüssel nach Anspruch 5 **dadurch gekennzeichnet, dass** die Hilfsmittel so ausgestaltet sind, dass Kernteil (5) und Mantelteil (6) von einer ersten Kontaktposition in eine Endposition bringbar sind.

7. Farbschlüssel nach einem der Ansprüche 1 bis 6, **dadurch gekennzeichnet, dass** der Kernteil (5) und der Mantelteil (6) aus Dentalmassen bestehen.

8. Farbschlüssel nach einem der Ansprüche 4 bis 7, **dadurch gekennzeichnet, dass** die Halteelemente (4a/4b) aus einem transparenten Kunststoff ausgebildet sind.

9. Farbschlüssel nach einem der Ansprüche 1 bis 8, **dadurch gekennzeichnet, dass** der modular aufgebaute Referenzbereich (3) der Referenzelemente (2) naturzahnartig ausgebildet ist, insbesondere in etwa die Form eines Zahnes hat.

10. Farbschlüssel nach einem der Ansprüche 1 bis 9 **dadurch gekennzeichnet, dass** der Farbschlüssel (1) wenigstens eine Basisplatte (7) aufweist, in welche die Referenzelemente (2) einsteckbar sind.

11. Dentalkit enthaltend einen Farbschlüssel, insbesondere einen Farbschlüssel (1) nach einem der Ansprüche 1 bis 10, mit Referenzelementen (2), deren Referenzbereich (3) modular aufbaubar ist.

12. Referenzelement mit einem Referenzbereich (3) für einen Farbschlüssel (1) nach einem der Ansprüche 1 bis 10.

13. Verwendung eines Farbschlüssels (1) mit Referenzelementen (2), deren Referenzbereich (3) modular aufbaubar ist, insbesondere eines Farbschlüssels (1) nach einem der Ansprüche 1 bis 10,zur Farbauswahl von dentalen Restaurationsmassen oder künstlichen Zähnen.

14. Verfahren zur Farbauswahl, insbesondere im Dentalbereich, mit einem Farbschlüssel (1) mit Referenzelementen (2), die aus Kern- (5) und Mantelteilen (6) modular aufbaubar sind, insbesondere mit einem Farbschlüssel (1) nach einem der Ansprüche 1 bis 10, enthaltend die Schritte (a-c) :
a) Positionieren verschiedener Kernteile (5) an einer ersten Stelle, insbesondere an einem Zahnhals, bis eine farbliche Übereinstimmung zwischen dem Referenzbereich (3a) eines Kernteils (5) mit der Stelle erzielt wird.
b) Positionieren verschiedener Mantelteile (6) vor oder nach Schritt a) an einer zweiten von der ersten verschiedenen Stelle, insbesondere an einer Schneidekante eines Zahnes, bis eine farbliche Übereinstimmung zwischen dem Referenzbereich (3b) eines Mantelteils (6) mit der Stelle erzielt wird.
c) Zusammenfügen eines in Schritt a) ausgewählten Kernteils (5) mit einem in Schritt b) ausgewählten Mantelteil (6) zu einem Referenzelement (2) mit einem modular aufgebauten Referenzbereich (3)

15. Verfahren nach Anspruch 14 **dadurch gekennzeichnet, dass** das in Schritt c) aufgebaute Referenzelement (2) in Schritt d) an einem Zahn zum Farbvergleich positioniert wird.

16. Verfahren nach Anspruch 15 **dadurch gekennzeichnet, dass** das in Schritt a) ausgewählte Kernteil (5) und/oder das in Schritt b) ausgewählte Mantelteil (6) so lange durch ein anderes Kernteil (5) und/oder Mantelteil (6) substituiert werden, bis der Farbvergleich in Schritt d) zu einem akzeptablen Resultat führt.
